(19) Europäisches Patentamt
European Patent Office
Office européen des brevets

(11) **EP 1 468 430 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **03729223.2**

(22) Anmeldetag: **07.01.2003**

(51) Int Cl.:
*C12Q 1/68* (2006.01)     *B03C 1/01* (2006.01)
*H01F 1/36* (2006.01)

(86) Internationale Anmeldenummer:
**PCT/EP2003/000054**

(87) Internationale Veröffentlichungsnummer:
**WO 2003/058649 (17.07.2003 Gazette 2003/29)**

(54) **SILIZIUMHALTIGE MAGNETPARTIKEL, VERFAHREN ZU DEREN HERSTELLUNG UND VERWENDUNG DER PARTIKEL**

SILICON-CONTAINING MAGNETIC PARTICLES, METHOD FOR PRODUCING SAID PARTICLES AND USE OF THE SAME

PARTICULES MAGNETIQUES CONTENANT DU SILICIUM, PROCEDE DE FABRICATION ET UTILISATION

(84) Benannte Vertragsstaaten:
**AT BE BG CH CY CZ DE DK EE ES FI FR GB GR HU IE IT LI LU MC NL PT SE SI SK TR**

(30) Priorität: **14.01.2002 DE 10201084**

(43) Veröffentlichungstag der Anmeldung:
**20.10.2004 Patentblatt 2004/43**

(73) Patentinhaber: **Siemens Healthcare Diagnostics GmbH**
**65760 Eschborn (DE)**

(72) Erfinder:
• **HENNIG, Guido**
**50859 Köln (DE)**
• **HILDENBRAND, Karlheinz**
**47802 Krefeld (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
WO-A-01/37291     WO-A-01/88540
WO-A2-01/71732     DE-A1- 19 912 799
US-A- 4 325 739

**Beschreibung**

Die Erfindung betrifft superparamagnetische Partikel bestehend aus kugelförmigen Magnetit-Kernen mit einer Oberflächenschicht aus Siliziumdioxid. Die mit Siliziumdioxid beschichteten Magnetit-Partikel werden für die Isolierung von Nukleinsäuren eingesetzt, wobei die Abtrennung mittels magnetischer Felder aus einer Probenmatrix erfolgt.

In jüngster Zeit gewinnt die Molekulare Diagnostik zunehmend an Bedeutung. Die Molekulare Diagnostik hat Eingang gefunden in die klinische Diagnostik von Erkrankungen (u.a. Nachweis von Infektionserregern, Nachweis von Mutationen des Genoms, Entdeckung von zirkulierenden Tumorzellen und Identifizierung von Risikofaktoren für die Prädisposition einer Erkrankung). Aber auch in der Veterinärmedizin, der Umweltanalytik und Nahrungsmitteltestung finden Methoden der molekularen Diagnostik mittlerweile ihre Anwendung. Ein weiteres Anwendungsgebiet stellen Untersuchungen an pathologischen/zytologischen Instituten oder im Rahmen forensischer Fragestellungen dar. Aber auch im Rahmen der Gesundheitsvorsorge (z.B. Untersuchungen von Blutkonserven auf Infektionserreger-Freiheit) wird die Gen-Diagnostik mittlerweile eingesetzt und der Gesetzgeber plant, solche Testungen per Gesetz in Zukunft anzuordnen. Methoden, die auch bei der klinischen Molekularen Diagnostik zum Einsatz kommen (wie z.B. Hybridisierungs- oder Amplifikationstechniken wie die PCR (Polymerase Chain Reaction), TMA (Transcription Mediated Amplification), LCR (Ligase Chain Reaction), bDNA (branched DNA) oder NASBA-(Nucleic Acid Sequence Based Amplification)) gehören auch bei wissenschaftlichen Grundlagenarbeiten zu den Routineverfahren.

Voraussetzung für die Durchführung eines Assays in der Molekularen Diagnostik ist im Allgemeinen die Isolierung von DNA oder RNA aus der zu analysierenden Probe. Zwar gibt es Analyseverfahren, wie z.B. bDNA-basierte Tests, die es erlauben, Nukleinsäureisolierung und Nachweisreaktion gemeinsam durchzuführen, doch erfordert die PCR als die in der Molekularen Diagnostik am weitesten verbreitete molekularbiologische Methode wegen ihrer Beeinflussbarkeit durch exogene Faktoren nahezu immer die Verwendung von vorher gereinigten Nukleinsäuren.

Die klassischen Präparationsverfahren für Nukleinsäuren beruhen dabei auf einer Flüssig-Flüssig Extraktion. Als Beispiel sei hier die Phenol-Chloroform Extraktion von DNA aus Körperproben genannt. Der hohe Arbeitsaufwand und die Notwendigkeit, teilweise hochtoxische Substanzen verwenden zu müssen, hat diese Verfahren jedoch in den vergangenen Jahren stark zu Gunsten von festphasebasierten Verfahren in den Hintergrund treten lassen.

Bei der Verwendung von festphasebasierten Extraktionsverfahren von Nukleinsäuren lässt sich die Probenvorbereitung zum eigentlichen Analysengang, weitgehend unabhängig von der jeweiligen Fragestellung in vier Grundschritte unterteilen: 1. Konditionierung der festen Phase; 2. selektive oder spezifische Bindung des Analyten an die feste Phase und Entfernung der übrigen Probematrix; 3. Herauswaschen von eventuellen Verunreinigungen aus der festen Phase und 4. Elution des angereicherten und gereinigten Analyten.

Hinsichtlich selektiver und reversibler Bindung von Nukleinsäuren macht man sich die lange bekannte Eigenschaft von Nukleinsäuren zu nutze, unter chaotropen oder anderen Hochsalzbedingungen, d. h. bei hohen Konzentrationen von chaotropen oder anderen Salzen, spezifisch an silikathaltige Adsorbentien wie Glasmehl [Proc. Natl. Acad. USA 76 (1979) 615-619, Anal. Biochem. 121 (1982) 382-387], diamatomeenerde [Methods Enzymol. 65 (1979) 176-182] oder native Kieselerde [J. Clin. Microbiol. 28 (1990) 495-503, EP 0 389 063 B1] zu binden. Mit Hilfe eines ein wasserlösliches organisches Lösungsmittel enthaltenen Puffers, in der Regel ist das ein niederer aliphatischer Alkohol, werden dann Verunreinigungen von dem Adsorbens gewaschen, der Träger getrocknet und die adsorbierten Nukleinsäuren mit destilliertem Wasser oder einem sogenannten Niedrigsalzpuffer, d.h. Puffer mit geringer Ionenstärke, eluiert.

Im Hinblick auf vollständige Automatisierung der Nukleinsäureisolierungsprozesse spielt die oben erwähnte Isolierung über superparamagnetische Adsorbentien eine zunehmend wichtige Rolle. WO 01/46404 beschreibt Testkits bestehend aus Metalloxiden (Magnetite), Bindungspuffern und Elutionspuffern. Der Elutionsschritt hat den Nachteil des erhöhten Zeitaufwandes und führt insbesondere bei einer Automatisierung zu erhöhten Verfahrenskosten. Ein weiterer Nachteil ist, dass beim Abtrennen des Eluats normalerweise kleine undefinierte Restvolumina mit gelöster Nukleinsäure auf der Partikeloberfläche durch hygroskopische Wechselwirkungen verbleiben und somit quantitative Nachweise im Eluat zu niedrigeren bzw. falschen Ergebnissen führten. Es wäre somit von großem Vorteil, auf diesen zusätzlichen Verfahrensschritt zu verzichten und den Nachweis der aufgereinigten Nukleinsäure auf bzw. in Gegenwart der Magnetpartikel zu führen. Dies ist aber im allgemeinen nicht möglich, weil die sehr empfindlichen, oft enzymatischen Nachweis- und Amplifikationsreaktionen, wie z.B. die PCR, nicht kompatibel sind mit der Anwesenheit der Beads und gehemmt werden. Teil der Erfindung ist, dass der quantitative PCR Nachweis auch in Gegenwart der Partikel ohne vorherigen Separationsschritt des Eluats erfolgen kann.

Bei den verwendeten Magnetpartikeln handelt es sich um magnetische Eisenoxide, die kommerziell erhältlich sind und im Magnetfeld abgetrennt werden können. Einen breiten Raum sowohl in der Literatur als auch in der Anwendung nehmen silikatisch modifizierte Adsorbentien mit superparamagnetischen Eigenschaften ein.

Unter silikatisch werden in diesem Zusammenhang Schichten aus Siliziumdioxid ($SiO_2$), auch Kieselsole genannt, verstanden. So lassen sich poröse Gläser mit Hilfe entsprechender Eisensalzlösungen in superparamagnetisches Glas überführen und zur DNA-Isolierung nutzen (US 0573 4020, US 0561 0274).

Die Umsetzung der Eisensalze zu magnetischem Eisenoxid ist bekannt und beispielsweise in DE 199 12 799 beschrieben.

Im überwiegenden Teil der bisher bekannten Verfahren werden die kieselgelhaltigen Magnetit-Partikel durch in-situ-Reaktionen von reaktiven Siliziumverbindungen hergestellt.

Hierzu werden überwiegend zwei verschiedene Reaktionstypen ausgenützt: Zum einen die Hydrolyse von monomeren reaktiven Siliziumverbindungen, wobei häufig Kieselsäureester, wie Tetraethylorthosilikat oder Siliziumtetrachlorid eingesetzt werden. Diese Herstellungsweise ist nicht Gegenstand der vorliegenden Erfindung.

Zum anderen sind auch Verfahren beschrieben, die auf der sog. Wasserglaschemie beruhen. Wie beispielsweise in "The chemistry of Silica" P. K. Iler, John Wiley 1979 beschrieben, handelt es sich bei Wassergläsern um wasserlösliche, oligomere alkalisch eingestellte Silikatstrukturen, die beim Ansäuern zu wasserunlöslichen Kieselsolen polykondensieren.

Folgende Veröffentlichungen beziehen sich auf das Hydrolyseverfahren von monomeren, reaktiven Silikonverbindungen:

WO 96/41811 beschreibt ein Sol-Gel-Verfahren ausgehend von Tetraethylorthosilikat in Gegenwart weiterer Oxide. Durch Einarbeiten von magnetischen Materialien werden schließlich die mit Silikat modifizierten Magnet-Partikel erhalten. Auffallend bei diesen Produkten ist die relativ große Korngrößenverteilung (10 - 60 $\mu$m) sowie die unregelmäßigen Strukturen der entsprechenden Partikel.

Das kann insbesondere zu Schwierigkeiten beim Pipettieren und damit zu einer reduzierten Genauigkeit in der anschließenden PCR-Analyse führen.

WO 01/88540 beschreibt Magnetpartikel mit Silicabeschichtung, die aus Mikroemulsionen präzipitiert werden.

In WO 01/71732 sind Verfahren beschrieben, die auf alkalischer oder saurer Hydrolyse von Tetraethoxysilan beruhen. Kommerziell erhältliche Eisenoxidpartikel werden in Alkohol suspendiert, wobei die hydrolysierten $SiO_2$ Strukturen auf den Eisenoxidpartikeln niederschlagen. Es werden Partikel mit einer Korngrößenverteilung von 5 bis 25 $\mu$m und einer spezifischen Oberfläche (BET) im Bereich von 190 bis 270 m$^2$/g erhalten.

Auffallend ist, dass die Korngrößenverteilung deutlich größerer und breiter ist, als die eingesetzten Primärpartikel der Magnetoxide. So erhält man aus dem Magnetit Bayoxide 8713H, das eine enge Korngrößenverteilung im Bereich von ca. 0,1 bis 0,8 $\mu$m besitzt, nach dem erfindungsgemäßen Verfahren deutlich größere Partikel (größer 5 $\mu$m) in einer Verteilung von 5 bis 10 $\mu$m. Um gute Bindungseigenschaften zu erhalten, wird hier gesagt, muss der $SiO_2$-Anteil im Magnetit mindestens 30 % oder mehr betragen.

Das Verfahren zur Herstellung von silikatischen Magnetiten durch Ansäuern von Wassergläsern (Natriumsilikate) in Gegenwart von Eisenoxiden ist in folgenden Anmeldungen beschrieben: WO 98/31840 DE 199 12 799 sowie in der o.g. Veröffentlichung WO 01/71732

Das Gemeinsame bei allen diesen Verfahren ist, dass durch Ansäuern der Magnet-Partikel/Wasserglas-Suspension die Kieselsol-Fällung ausgelöst wird. In DE 199 12 799 und WO 01/71732 wird dazu Essigsäure verwendet. In DE 420 7262 sind auch Mineralsäuren oder $CO_2$ erwähnt.

Wie in WO 01/71732 beschrieben, muss bei Verwendung von Silikat (Wasserglas) oder Silika-Nanopartikeln im Reaktionsgemisch ein pH-Wert von sechs oder kleiner eingestellt werden. Es handelt sich hierbei um einen relativ komplexen, mehrstufigen Prozess, der in alkoholischer Suspension durchgeführt wird.

Auch hierbei entstehen aus den sehr feinteiligen Magnetit-Primärpartikeln durch die Umsetzung deutlich größere Endprodukte. Diese Partikelvergrößerung ist damit zu erklären, dass beim Ansäuern der Silikatlösung wasserunlösliche Silikatgele entstehen, die magnetische Primärpartikel einschließen. So werden, wie in WO 01/7132 beschrieben, aus Magnetit-Partikeln mit Teilchengrößen < 1 $\mu$m (Magnetic Pigment 345, BASF) Endprodukte mit einem Partikeldurchmesser von 25 $\mu$m erhalten.

**Detaillierte Beschreibung:**

Die Erfindung bezieht sich auf Magnetpartikel nach Anspruch 1 und ein Verfahren zur deren Herstellung nach Anspruch 3, welche sich besonders gut zur effizienten und quantitativen Isolierung bzw. automatisierten Aufreinigung von Nukleinsäuren, meistens aus biologischen Körperproben, ganz besonders Serum, zwecks deren Nachweis mit verschiedenen Amplifikationsmethoden, eignen. Das hier von uns beschriebene Verfahren der Aufreinigung nach Anspruch 6, ist dadurch gekennzeichnet, dass ein quantitativer Nachweis auch in Gegenwart der magnetischen Partikeln durchgeführt werden kann; d.h. das Partikel vor der PCR nicht abgetrennt werden müssen.

Der Ausdruck "$SiO_2$-umhüllte magnetische Partikel" umfasst Magnetit-Kerne, die aus mindestens 90 Gewichtprozent $Fe_3O_4$ bestehen und deren Oberfläche mit Silikat beschichtet ist.

Es wurde überraschenderweise ein neues Verfahren zur Herstellung von $SiO_2$ - beschichteten $Fe_3O_4$ Magnetpartikeln (Magnetit) gefunden, das die o.g. Merkmale (mehrstufiger Herstellprozess, Ansäuern der Rezeptur und Vergrößerung der eingesetzten Partikel, schlechte Pipettierbarkeit des Reaktionsprodukts) nicht aufzeigt und dadurch gekennzeichnet ist, dass die Silikat-Abscheidung aus Wassergläsern oder Kieselsolen ohne Einstellung des Reaktionsgemisches auf saure pH Werte erfolgt.

Das neue Verfahren ist durch folgende Randbedingungen gekennzeichnet:

Bei den eingesetzten Magnetiten handelt es sich vorzugsweise um hydrophile, kommerziell erhältliche Eisenoxide ($Fe_3O_4$), die bevorzugt in enger Korngrößenverteilung und kugelförmiger Morphologie verfügbar sind.

Derartige Produkte werden beispielsweise von der Fa. Bayer AG unter dem Produktnamen BAYOXIDE E hergestellt. Geeignete Typen sind unter der Bezeichnung BAYOXIDE E8706, E8707, E8709 und E8710 erhältlich.

Obwohl mit allen genannten BAYOXIDE E Produkten gute Ergebnisse erzielt werden konnten, wurde vorzugsweise der Typ E 8707 verwendet.

Dieses magnetische Pigment besitzt eine kugelförmige Morphologie bei einem mittleren Teilchendurchmesser von 0,2 $\mu$m und enger Korngrössenverteilung (ca. 0,1 bis 0,7 $\mu$m). Der Oberflächen pH Wert (Bestimmung nach ISO 787 Teil 9) dieser Magnetit-Partikel liegt laut Spezifikation bei 6,5 und die spezifische Oberfläche (BET) bei 12 $m^2$/g. Der Eisenoxidgehalt (Besimmung nach DIN 55 913) liegt laut Spezifikation bei 97 %, wobei als Restbestandteil mittels ESCA Silizium ermittelt wurde. Die magnetischen Eigenschaften dieser Eisenoxid-Partikel sind durch folgende Werte charakterisiert: Coercivity (iHc): 70 Oe, Remanence (Br) $525\ cm^{-\frac{1}{2}}\ g^{\frac{1}{2}}\ s^{-1}\ (525\ G),$ 9,1 ×

$10^{-3}$ $Am^2$ (9,1 emu/g), ,Saturation magnetisation (Bs) 5 100 G, 88,3 x $10^{-3}$ $Am^2$ (88,3 emu/n). Ähnliche Produkte werden auch von BASF unter dem Namen "Magnetic Pigment 340" bzw. "345" vertrieben.

Als Ausgangsmaterialien zum Einführen von Silikatgruppen können sowohl Alkalisilikate (Natron- oder Kali-Wassergläser) als auch Kieselsole eingesetzt werden. Geeignete Wassergläser, die üblicherweise sehr hohe pH Werte (13-14) besitzen, werden von verschiedenen Firmen, beispielsweise Merck oder Cognis angeboten.

Ein wichtiges Kriterium bei Wassergläsern ist das Verhältnis von $SiO_2$/$Na_2O$ bzw. $SiO_2$/$K_2O$, charakterisiert durch den sog. MV-Wert (Molverhältnis). Je höher dieser Wert, desto weniger Säure ist erforderlich um die Wassergläser in die entsprechenden Kieselsole zu überführen. Überraschenderweise wurde gefunden, dass Wassergläser mit relativ hohen MV-Verhältnissen besonders vorteilhaft für das erfindungsgemäße Verfahren sind. Bevorzugt werden Alkaliwassergläser mit einem MV-Verhältnis von 3.2 oder größer.

Besonders geeignet sind beispielsweise das Kaliwasserglas 28/30 (MV= 3.92-4.08) sowie das Natronwasserglas HK 30 (MV=3.82-4.02) der Fa. Cognis. Ganz besonders bevorzugt ist das Natronwasserglas 37/40 (Cognis GmbH), das mit einem Molverhältnis von Mol$SiO_2$ zu Mol $Na_2O$ von 3.41-3.51 spezifiziert ist.

Kieselsole, die alternativ zu Wassergläsern eingesetzt werden können, werden aus Wassergläsern durch Alkalientzug, Einstellen des pH auf Werte von größer/gleich 9, und Tempern hergestellt, wobei Kieselsol Partikel mit Teilchengrößen im Bereich einiger Nanometer entstehen.

Geeignete Produkte werden von der Bayer AG unter dem Produktnamen Levasil 100, Levasil 200 und Levasil 300 hergestellt. Diese Produkte haben einen pH Wert im Bereich von 9-10 und Partikelgrößen im Bereich von 9 bis 30 nm.

Das erfindungsgemäße Verfahren besticht durch seine Einfachheit. Das zu beschichtende Material, beispielsweise Bayoxide E 8707, wird unter Rühren in eine verdünnte beispielsweise 1 %ige Wasserglaslösung gegeben. Nach einer Verweilzeit von ca. 30 Minuten wird abfiltriert, mit Wasser gewaschen und getrocknet.

Der Oberflächen pH-Wert der Magnetpartikel liegt unterhalb des pH-Wertes der eingesetzten Silikat-Quelle (Wasserglas oder Kieselsol).

Überraschend ist, dass die Morphologie der so behandelten magnetischen Partikel sich vom Ausgangmaterial überhaupt nicht unterscheidet, d.h. eine Agglomeration der Primärpartikel kann vollkommen vermieden werden, was elektronenmikroskopisch leicht nachgewiesen werden kann. Eine Partikelvergrößerung, wie in den o.g. Anmeldungen beschrieben, wird vollkommen verhindert.

Während also die, durch die Silika Beschichtung bedingte morphologische Veränderung der Magnetit Partikel durch konventionelle Elektronenmikroskopie nicht direkt sichtbar gemacht werden kann, lässt sich die Silkaoberfläche durch folgende Methoden detektieren: Isoelektrischer Punkt (IEP), Zetapotential, ESCA (Elektronen Spectroscopy for Chemical Analysis), EDX (Energy Dispersive Xray Spektroscopy) sowie ICP-OES (Inductively Coupled Plasma Optical Emission Spektroskopie).

Die entsprechenden Ergebnisse sind im Bsp. 1.c tabellarisch dargestellt, wobei der Vergleich mit den nicht Silika behandelten Magnetit Beads aufgeführt ist. Im Zusammenhang mit der Si-Bestimmung (%Si) soll darauf hingewiesen werden, dass die beiden Methoden ESCA und EDX Oberflächenmethoden sind, die lediglich den Si Gehalt and der Oberfäche der Silika modifizierten Magnet Beads erfassen. Dagegen ist die ICP-OES Spektroskopie ein Analyseverfahren, das zur Bestimmung des Gesamtgehaltes von Si eingesetzt wurde. Wie anschließend beschrieben, basiert diese Methode auf einem Aufschlussverfahren:

Die Probe wird in einer Salzmischung aus Natriumcarbonat, Kaliumcarbonat und Natriumtetraborat bei 800°C aufgeschlossen. Die erkaltete Schmelze wird mit Salzsäure aufgelöst.

Diese Messlösung wird in einen Argon-Gasstrom vernebelt und in ein Plasma (ICP: inductively coupled plasma) eingetragen. Bei Temperaturen von über 5000K werden die Atome zum Leuchten angeregt. Das für die einzelnen Elemente spezifisch emittierte Licht wird mittels OES (optical emission spectroscopy) detektiert. Die Quantifizierung erfolgt mit Hilfe von Kalibrierlösungen.

Dementsprechend unterscheiden sich, je nach eingesetzter Analysemethode, die Silika Gehalte deutlich, wie die Werte in Bsp. 1.c demonstrieren. So wurden bei der ESCA Methode beim nicht modifizierten Augangsmaterial (Bayoxide 8707, das herstellbedingt per se einen Si Gehalt von ca. 0.8 % Si hat) Werte von ca. 6.5-7.1 % Si gefunden, während bei den entsprechenden Silka behandelten Beads sogar Werte von 11.5-12.3 ermittelt wurden. Dagegen wurden mittels ICP-OES beim Ausgangsmaterial (Bayoxide 8707) die erwarteten Werte von ca. 0.8 % Si und beim Silika beschichteten Endprodukt ca. 1.1 % Si ermittelt. Dementsprechend wurde bei dem erfindungsgemäßen Beschichtungsverfahren ca. 0.3 Gew.-% Silika an der Oberfläche der Magnet Beads abgeschieden. Die daraus resultierenden Vorteile sind offensichtlich, da nach diesem Verfahren weder die Morphologie noch die magnetischen Eigenschaften der in hoher Qualität hergestellten Bayoxide nennenswert verändert werden.

Auffallend ist auch, wie die elektonenmikroskopischen Untesrsuchungen zeigen, dass die Partikeloberfläche glatt, also weitgehend porenfrei ist. Dies äußert sich auch in der Tatsache, dass die PCR quantitativ auch in Anwesenheit der Partikel läuft. Offensichtlich können die Nukleinsäuren wegen der Ermangelung von Poren der Partikel nicht in solche diffundieren, wo die Zugänglichkeit und die Effektivität der Polymerase eingeschränkt ist.

Diese siliziumbeschichteten Magnetpartikel können für die effiziente und quantitative Aufreinigung von Nukleinsäuren eingesetzt werden (s. Beispiele).

Der Ausdruck "Isolierung" umfasst die Aufreinigung der Nukleinsäure aus einer biologischen Probe unter Verwendung der oben genannten siliziumbeschichteten Magnetpartikel und teilt sich im wesentlichen in folgende Einzelschritte auf:

a) Aufschließen der Probe in einem Reaktionsgefäß mit einem Lyse- und Bindungspuffer, welcher vorzugsweise sogenannte chaotrope Salze, besonders bevorzugt Guanidin(ium)isothiocyanat, in hoher Molarität enthält

b) Zugabe von silikatbeschichteten Magnetpartikeln

c) Inkubation bei einer Temperatur, bei der die Nukleinsäure an die Magnet-partikel bindet

d) Entfernung nicht gebundener Bestandteile aus dem Reaktionsansatz durch Anlegen eines Magnetfeldes, welches die Magnetpartikel von der umliegenden Flüssigkeit abtrennt

e) Mehrmaliges Zugeben eines Waschpuffers mit anschließender Entnahme desgleichen bei Magnetisierung der Partikel zur Reinigung der Nukleinsäure von unspezifisch gebundenen Molekülen

f) Zugabe eines Elutionspuffers unter Bedingungen, wo die Nukleinsäure von dem Magnetpartikel getrennt wird

g) Abtrennen des Eluats mit der Nukleinsäure nach erneutem Anlegen eines Magnetfeldes.

Überraschenderweise haben die Erfinder die Beobachtung gemacht, dass der zuletzt genannte Schritt der Aufreinigung (g) weggelassen werden kann und der quantitative Nachweis mit der PCR auch in Anwesenheit der Magnetpartikel erfolgen kann, da diese die Nachweisreaktion nicht negativ beeinflussen und alle Nukleinsäuren der PCR Reaktion zur Verfügung stehen (s. Beispiel 4)

Der Ausdruck "automatisierte Aufreinigung" umfasst Varianten dieses Verfahren, in denen die manuelle Arbeitskraft von menschlichem Personal ganz oder auch nur in Teilschritten ersetzt und insbesondere bei den Schritten der Aufschließung der biologischen Körperprobe mit einem speziellen Puffer, der Zugabe von magnetischen Partikeln, der Inkubation bei einer bestimmten Temperatur, der Entfernung nicht absorbierter Probenbestandteile, den Waschschritten, der Elution gebundener Nukleinsäuren von den Partikeln bei einer bestimmten Temperatur und dem Abtrennen des Eluats von der Partikelsuspension Anwendung findet.

Der Ausdruck "Nukleinsäuren" umfasst oligomere und polymere Ribonukleotide bzw. 2'-Desoxyribonukleotide mit einer Kettenlänge von mehr als 10 Monomereinheiten. Die Monomereinheiten in Nukleinsäuren sind über Phosphorsäurediesterbindungen zwischen 3'- und 5'-Hydroxylgruppe benachbarter Monomereinheiten verknüpft und an das 1'-Atom der jeweiligen Kohlenhydratkomponente ist glykosidisch eine heterocyclische Base gebunden. Nukleinsäuren können durch Ausbildung von intermolekularen Wasserstoffbrückenbindungen Doppel- und Dreifachstränge ausbilden.

Ebenso sind Protein-/Nukleinsäurekomplexe (z.B. zirkulierende Nukleinsäuren in Serum - wie genomische DNA mit Histonen oder mRNA mit funktionell assoziierten Proteinen -, die aus Zellen durch Apoptose oder pathologische Prozesse freigesetzt wurden) sowie Nukleinsäuren mit synthetischen Nukleotiden, wie Morpholinos oder PNA's (peptide nucleic acids), gemeint.

Der Ausdruck "biologische Körperprobe" umfasst nukleinsäurehaltiges, biologisches Material, wie z.B. Gesamtblut, Blutserum oder Blutplasma, insbesondere virushaltiges Serum oder Plasma, dabei ganz besonders HIV und HCV infizierte Serumproben, "Buffy Coat" (= weiße Blutkörperchenfraktion des Blutes), Faeces, Ascites, Abstriche, Sputum, Organpunktate, Biopsien, Gewebeschnitte, Milchgangflüssigkeit, Sekrete, Liquor, Galle, Lymphflüssigkeit, Urin, Stuhl, Sperma, Zellen und Zellkulturen. Ebenso kann es sich um Nukleinsäuren handeln, welche aus biochemischen Prozessenstammen und anschließend aufgereinigt werden sollen.

Der Ausdruck "Nachweis mit verschiedenen Amplifikationsmethoden" umfasst die Vervielfältigung der aufgereinigten Nukleinsäuren mit Hilfe verschiedener molekularbiologischer Technologien, insbesondere der PCR, der transkriptionsmediierten Amplifikation (TMA), LCA oder auch NASBA und die anschließende oder simultane Detektion der Amplifikationsprodukte. Ebenso ist der Nachweis mit Signalamplifikationsmethoden, wie z.B. der bDNA, also ohne Nukleinsäureamplifikation gemeint. Die Detektion insbesondere der PCR kann durch die Anwendung kinetischer Verfahren mit Hilfe der Fluoreszenztechnologie auch unter "real-time" Bedingungen durchgeführt werden oder auf einem klassischen Agarose-Gel erfolgen. Insbesondere die "real-time" PCR ermöglicht eine sehr gute quantitative Bestimmung von Nukleinsäuren unter Verwendung von entsprechenden Kalibratoren. Kritisch und limitierend für die klinische Sensitivität (Vermeidung von falsch negativen Ergebnissen) ist dabei die effiziente Aufreinigung der Nukleinsäuren, d.h. effiziente Bindung an das Magnetpartikel und reversible Freisetzung unter PCR kompatiblen Bedingungen.

Der Ausdruck "effizient und quantitativ" bedeutet, dass die Wiederfindungsrate nach manueller oder automatisierter Aufreinigung (Verhältnis aus eingesetzter zu aufgereinigter Nukleinsäuremenge) mindestens 50 %, im allgemeinen jedoch zwischen 80 % und 100 % beträgt. Des weiteren zeichnet sich der Aufreinigungsvorgang mit den Magnetpartikeln durch eine Linearität über den dynamischen Messbereich des jeweiligen zu vermessenden Analyten aus (z.B. bei HC-Viren von $10^7$ bis 50 copien/ml), dass heißt der gesamte Aufreinigungsvorgang (Lyse, Bindung, Waschen, Elution) erfolgt mit einer hohen Ausbeute und ist über verschiedene Konzentrationsbereiche des Analyten gleich verteilt (konsistente Wiederfindungsrate). Dies ist die Voraussetzung für eine richtige, quantitative Detektion mit den unterschiedlichen Amplifikationstechnologien über einen großen Messbereich.

Ein weiterer Gegenstand der Erfindung ist ein Kit zur Durchführung eines erfindungsgemäßen Verfahrens, das folgende Bestandteile enthält:

(a) Reagenzien zum Aufschließen der Probe

(b) Siliziumhaltige Magnetpartikel oder eine Suspension von siliziumhaltigen Magnetpartikeln

(c) Waschpuffer

(d) Elutionspuffer

Für die einzelnen Komponenten des Kits gelten die vorstehenden Ausführungen und nachfolgenden Beispiele. Einzelne oder mehrere Komponenten des Kits können auch in veränderter Form Verwendung finden.

Mit der vorliegenden Erfindung ist es möglich, aufgrund der Verwendung von speziell hergestellten siliziumbeschichteten Magnetpartikeln besonders effizient und quantitativ Nukleinsäuren aus biologischen Körperproben, insbesondere virushaltiges Serum oder Plasma aufzureinigen und mit entsprechenden Amplifikationstechniken nachzuweisen.

Somit stellt die vorliegende Erfindung einen wichtigen Beitrag für die Nukleinsäurediagnostik dar.

## Beispiele

Nachfolgend werden beispielhaft Protokolle zur Durchführung der beschriebenen Erfindung gegeben. In diesen Beispielen werden exakte Reaktionsbedingungen für die jeweilige aufzureinigende Nukleinsäure angegeben, allerdings können verschiedene Parameter, wie z.B. Magnetpartikelmenge, Inkubations- und Waschtemperatur, Inkubations- und Waschzeiten sowie die Konzentration von Lysispuffer, Waschpuffer und Elutionspuffer, in Abhängigkeit von der jeweiligen auzureinigenden Nukleinsäure variiert werden.

**Beispiele 1**

1. Herstellen von silikatbeschichteten Magnetit-Partikeln

1.a. 0,25 %ige Wasserglaslösung

In 1000 ml einer wässrigen 0,25 %igen Wasserglaslösung (HK 30; Cognis) wurden unter Rühren 50 g Bayoxide E 8707 gegeben, anschließend wurde noch 30 Min. bei RT nachgerührt.
Die Partikel wurden abfiltriert, 5mal mit Wasser und einmal mit Ethanol gewaschen und anschließend 5 Std. bei 80°C getrocknet.

1.b. 20 %ige Wasserglaslösung

Der Versuch erfolgte analog zu 1.a. nur dass anstelle der 0,25 %igen eine 20 %ige wässrige Wasserglaslösung eingesetzt wurde.
Durch die Wasserglasbeschichtung wurden bei den Eisenoxid-Magnetiten die folgenden Eigenschaftsveränderungen erzielt:

| | Bayoxide 8707 | 0.25 % HK30(1a) | 20 %ige HK30(1b) |
|---|---|---|---|
| Eigen pH Wert: | 5,3 | 5,8 | 5,8 |
| Zetapotenzial (mV): | 20,6 | - 50,1 | -57,8 |
| IEP (Isoelektr. P.): | 6,2 | 3,3 | 1,9 |
| ESCA (Si Gehalt in %): | 6.9 | **9.7** | **16.5** |

1.c: .Herstellung von Silika beschichteten Magnetit Partikeln mit Wasserglas 37/40 (Cognis GmbH)

In einem 61 Dreihalskolben mit KPG Rührer werden 4000.0 g Wasserglaslösung 37/40 (Cognis GmbH) vorgelegt. Unter Rühren werden 2000.0 g Bayoxide 8707 (Bayer AG)innerhalb von 10 Minuten zugegeben. Anschließend wird noch eine Stunde bei RT nachgerührt. Nach Abschalten des Rührers setzen sich die Silka beschichteten Magnetit Beads ab. Nach einer Wartezeit von einer Stunde wird der Überstand abgesaugt. Zur Aufarbeitung werden 4 1 Wasser zugegeben wobei ca. 10 Min gerührt wird. Der Überstand wird wiederum abgesaugt. Dieser Waschprozess wird noch viermal wiederholt, wobei das letzte Waschwasser einen pH Wert von 7.5-7.0 erreichen soll. Die feuchten Beads werden in 800 ml Isopropanol aufgeschlämmt, abfiltriert und 5 Stunden bei 80°C getrocknet.
Charakterisierung der Silika beschichteten Magnetit Beads:
Die folgende Tabelle zeigt die Eigenschaften der Silka Beads im Vergleich zum nicht behandelten Ausgangsprodukt:

| | Bayoxide 8707 | Bayoxide 8707 mit Silkat-Schicht |
|---|---|---|
| pH | 5.3 | 5.6 |
| IEP | 6.2 | 2.0 |
| Zeta-Potential | 20.6 | -58.3 |
| % Si an der Oberfläche (ESCA) | 6.9 | 11.8 |
| % Si Gesamtgehalt (ICP-OES) | 0.82 | 1.1 |
| Oberfläche (BET, $m^2/g$): | | 12.4 |
| Dichte ($g/cm^3$): | | 1.83 |
| Magnetische Eigenschaften: | | |
| IHc (Oe) | | $5650 \frac{A}{m} \hat{=} (71 \ Oe)$ |
| Br (emu/g) | | $7.7 \times 10^{-3} Am^2 \hat{=} (7.7 \ emu/g)$ |
| Bs | | 89.5 |

**Beispiel 2**

Aufreinigung von DNA Plasmid aus Serum

In einem Eppendorf-Reaktionsgefäß werden zu 100 µl fötalem Kälberserum (GIBCO) 0,45 ng (in 5 µl H$_2$O) eines pCR II-TOPO Plasmids (Invitrogen), welches ein kloniertes 100 bp Fragment mit einer Teilsequenz aus dem Pseudorabies Virus (Seq ID No:1) enthält, hinzugegeben. Dies entspricht 10$^8$ Plasmidkopien. Des weiteren werden Ansätze mit 10$^6$, 10$^4$ und 10$^2$ Kopien in jeweils 5 µl vorbereitet. Anschließend werden 400 µl des Bindungspuffers (5 M Guanidiniumisothiocyanat, 10 mM TrisHCl, 20 % Triton, pH 8,8) sowie 2 mg der beschriebenen siliziumbeschichteten Magnetpartikel aus Beispiel 1a hinzugegeben. Die Ansätze wird dann 1 Stunde bei Raumtemperatur unter Schütteln (1200 rpm, Eppendorf Thermomixer 5436) inkubiert. Danach werden die Magnetpartikel durch Anlegen eines Magnetfeldes (1 min) an die Gefäßwand gezogen und der Überstand sauber abpipettiert. Anschließend werden die Magnetpartikel insgesamt zweimal mit einem Waschpuffer (50 % Äthanol, 20 mM NaCl, 10 mM Tris-HCl, pH 7,5) unter jeweiligem Anlegen des Magnetfeldes gewaschen und 5 min bei 37°C getrocknet. Zur Elution der gebundenen Nukleinsäure werden 50 µl TE-Puffer (10 mM Tris, 1 mM EDTA, pH 7,0) zu den Partikeln gegeben und 10 min bei 90°C inkubiert. Zuletzt wird nochmals ein Magnetfeld angelegt und das Eluat der Ansätze von den Partikeln abpipettiert.

**Beispiel 3**

Quantitativer Nachweis des Plasmids mit kinetischer PCR

Der quantitative Nachweis der aufgereinigten Nukleinsäuren erfolgt mit Hilfe des qPCR-Analysegerätes 7700 der Firma ABI.

5 µl der verschiedenen Eluate werden mit 45 µl PCR Mastermix (Endkonzentration: 300 nM Primer A (SeqID No. 2), 300 nM Primer B (SeqID No. 3), 150 nM Taqman Sonde (SeqID No. 4), angesetzt mit Taqman Mastermix von ABI, Best.Nr. 58004008-01) in eine 96well Mikrotiterplatte (ABI) gegeben und nach Verschließen ins Analysegerät gestellt. Als Standards für die Eichkurve wird eine absteigende Verdünnungsreihe von 10$^8$, 10$^7$ bis 10$^1$ Kopien pro 5 µl pipettiert. Die anschließende PCR erfolgt unter folgenden Bedingungen: 2 min 50°C, 10 min 95°C, 45 Zyklen mit 15 Sekunden 95°C, 1 min bei 60°C.

Nach dem Lauf wird mit Hilfe der Gerätesoftware bei einem gewählten Basiswert (Fluoreszenzintensität) im exponentiellen Amplifikationsbereich der Signalkurven jedem Standard und unbekannter Probe ein individueller C$_t$-Wert (Zykluszahl, wo der gewählte Basiswert die Amplifikationskurve schneidet) zugeordnet und damit eine Eichkurve erstellt. Mit dieser Eichkurve lässt sich die Plasmidkopienzahl der Eluate bestimmen und sich die Aufreinigungsausbeute in % der eingesetzten Kopien ausdrücken:

Tabelle:

| Kopienzahl (eingesetzt/ theoretisch) | Kopienzahl (eingesetzt gemessen) | Kopienzahl im Eluat | Wiederfindung in % |
|---|---|---|---|
| 100000000 | 79600000 | 80500000 | 101 |
| 1000000 | 1640000 | 1430000 | 87 |
| 10000 | 6840 | 6160 | 90 |
| 100 | 77 | 126 | 162 |

**Beispiel 4:**

Quantitativer Nachweis von aufgereinigtem Plasmid in Gegenwart der magnetischen Partikel

Es wurden 3 Ansätze mit je 0,5 mg Magnetpartikeln und 10$^8$ Plasmidkopien nach Beispiel 2 aus Serum aufgereinigt. Nach dem Trocknen des Magnetpartikel-Pellets werden zu allen Ansätzen wiederum 50 µl TE-Puffer (10 mM Tris, 1 mM EDTA, pH 7,0) zu den Partikeln gegeben. Bei Ansatz 1 (Suspension 1) werden 5 µl in der PCR vermessen. Beim zweiten Ansatz werden die Partikel (Suspension 2) 10 min bei 90°C inkubiert und wiederum 5 µl in der PCR vermessen. Mit dem 3. Ansatz wird wie in Beispiel 2 verfahren, d.h. 10 min bei 90°C inkubiert und das Eluat abpipettiert. Nun gibt man wiederum 50 µl TE-Puffer zu den eluierten Magnetpartikeln (Suspension 3). Es werden sowohl 5 µl davon als auch vom Eluat vermessen und die Wiederfindungsrate von allen Ansätzen in % ausgedrückt.

| Probe | Wiederfindungsrate in % |
|-------|------------------------|
| Suspension 1 | 40 |
| Suspension 2 | 125 |
| Suspension 3 | 5 |
| Eluat | 100 |

**Beispiel 5**

Aufreinigung genomischer DNA aus Blut

In einem Eppendorf-Reaktionsgefäß werden zu 10 µl Blut 400 µl des Bindungspuffers (5M Guanidiniumisothiocyanat, 10 mM TrisHCl, 20 % Triton, pH 8,8) sowie 1 mg des beschriebenen siliziumbeschichteten Magnetpartikels aus Beispiel 1a hinzugegeben. Der Ansatz wird dann 1h bei Raumtemperatur unter Schütteln (1200 rpm, Eppendorf Thermomixer 5436) inkubiert. Danach werden die Magnet-partikel durch Anlegen eines Magnetfeldes (1 min) an die Gefäßwand gezogen und der Überstand sauber abpipettiert. Anschließend werden die Magnetpartikel insgesamt zweimal mit einem Waschpuffer (50 % Äthanol, 20mM_NaCl, 10 mM Tris-HCl, pH 7,5) unter jeweiligem Anlegen des Magnetfeldes gewaschen und 5 min bei 37°C getrocknet. Zur Elution der gebundenen Nukleinsäure werden 50 µl TE-Puffer (10 mM Tris, 1 mM EDTA, pH 7,5) zu den Partikeln gegeben und 10 min bei 90°C inkubiert. Zuletzt wird nochmals ein Magnetfeld angelegt und das Eluat des Ansatzes von den Partikeln abpipettiert.

**Beispiel 6**

Quantifizierung der aufgereinigten genomischen DNA mit PCR

Der quantitative Nachweis der aufgereinigten Nukleinsäuren erfolgt mit Hilfe des qPCR-Analysegerätes 7700 der Firma ABI. Dazu wird ein Teil des β-Actin Gens mit Komponenten des "TaqMan DNA Template Reagents" Kits der Firma Applied Biosystems (Best. Nr. 401970) amplifiziert, das u.a. den β-Aktin-forward Primer, den β-Aktin-reverse Primer und die β-Aktin-Probe beinhaltet.

5 µl des verschiedenen Eluates werden mit 45 µl PCR Master-Reaktionsmix, bestehend aus 300 nM β-Aktin-Forward Primer, 300nM ß-Aktin-reverse Primer, 200 nM β-Aktin-Probe und 1x Taqman Mastermix von ABI, Best.Nr. 58004008-01, in eine 96well Mikrotiterplatte (ABI) gegeben und nach verschließen ins Analysegerät gestellt. Als Standards für die Eichkurve wird eine absteigende 10-fach Verdünnungsreihe von 100 ng - 0,1 ng pro 5 µl humaner Placenta DNA der Firma Sigma (Best. Nr. D-3287) pipettiert. Die anschließende PCR erfolgt unter folgenden Bedingungen: 2 min 50°C, 10 min 95°C, 45 Zyklen mit 15 Sekunden 95°C, 1 min bei 60°C. Nach dem Lauf wird mit Hilfe der Gerätesoftware bei einem gewählten Basiswert Fluoreszenzintensität) im exponentiellen Amplifikationsbereich der Signalkurven jeder Probe ein individueller Ct-Wert (Zykluszahl, wo der gewählte Basiswert die Amplifikationskurve schneidet) zugeordnet. Mit Hilfe der Standards wird aus diesen Werten eine Eichkurve erstellt. Anhand dieser Eichkurve ermittelt die Gerätesoftware mit den gemessenen Ct-Werten der Eluatproben die darin enthaltene DNA-Menge. In 2 unabhängigen Experimenten aus der gleichen Blutprobe wurden jeweils 51 bzw. 80 ng aus 10 µl Blut isoliert.

## Seq ID No 1:

gaccggctgtgtatctcgctgagtcagcagtgcttcgctacaaagtgcggcagcaacgcgacgcgcaccattttcaccgcg

gaggtggggcaatcatgct

SeqID No.2 - GAC CGG CTG TGT ATC TCG CT -
SeqID No.3 - AGC ATG ATT GCC CCA CCT C -
SeqID No.4 FAM- TCA GCA GTG CTT CGC TAC AAA GTG CG TXT X =TAMRA (Tetramethylrhodamin)

**Beispiel 7**

Isolierung von HCV RNA aus infektiösen Serumproben

Es werden zu 500 μl einer HCV Serumprobe 10 μl Proteinase K-Lösung (Roche: 40 mg/ml) gegeben und 10 min bei 56°C im Eppendorf Thermomixer 5436 bei 1200 rpm inkubiert. Nach Zugabe von 1000 μl eines Lysis-Puffers (5 M Guanidinthiocyanat, 100 mM Natriumacetat, 10 % v/v Triton X-100, pH 4,1) werden die Proben für weitere 10 min bei 56°C inkubiert. Anschließend werden 1mg magnetische Partikel (in 25 μl H$_2$O) zugegeben und noch mal für 15 min bei Raumtemperatur auf dem Eppendorf Thermomixer 5436 (1400 rpm) inkubiert. Danach werden die Magnetpartikel durch Anlegen eines Magnetfeldes (1 min) an die Gefäßwand gezogen und der Überstand sauber abpipettiert. Anschließend werden die Magnetpartikel zunächst einmal mit 850 μl Waschpuffer I (3 M Guanidiniumthiocyanat, 100 mM Natriumacetat, 30 % Äthanol, pH 5,2), einmal mit 450 μl Waschpuffer II (80 % Äthanol, 10 mM Natriumacetat, pH 6,7) und danach zweimal mit 450 μl Waschpuffer III (10mM Citratpuffer pH 4,0; zusammengesetzt aus 6,25 mM Citrat-Monohydrat und 3,75 mM Natriumcitrat Dihydrat) unter jeweiligem Anlegen des Magnetfeldes gewaschen. Nach dem Abnehmen des letzten Waschüberstandes werden die Proben kurz anzentrifugiert und magnetisiert, um restlichen Waschpuffer vollständig zu entfernen. Zu den Partikeln werden anschließend 50 μl Elutionspuffer (10 mM Tris pH 8,8, 1 μl SuperaselN/Ambion auf 100 μl Puffer) gegeben. Zur Elution werden die Proben 10 min bei 70°C inkubiert (Eppendorf Thermomixer 5436 bei 1400 rpm). Nach der Elution werden die Proben kurz anzentrifugiert und magnetiesert. Zuletzt wird nochmals ein Magnetfeld angelegt und das Eluat der Ansätze von den Partikeln abpipettiert.

Die isolierte HCV RNA wird anschließend in RT-PCR Reaktionen eingesetzt und quantifiziert. Dazu werden 20 μl des Eluates mit 30 μl eines RT-PCR Mastermixes (QuantiTect Probe RT-PCR Kit von Qiagen, Konzentration der Primer C und D (Seq ID No. 5 und 6) ist 400 nM, Konzentration der HCV Probe (SeqID No.7 250 nM) vermischt und auf dem ABI 7700 Detektionsgerät vermessen. Die Geräteeinstellungen sind 45°C 30 min, 95°C 15 min, 45x Zyklen mit 95°C 15 sec und 63°C 1 min.

HCV infiziertes Serum mit Konzentrationen (Kopien oder IU/ml), die mehrmals um Faktor 10 mit Normalserum verdünnt wurden, ergeben nach Aufreinigung und Detektion sich linear verhaltende Ct-Werte, die sich im Durchschnitt um 3,32 Ct-Werte erhöhen ($2^{3,32} = 10$). In Bezug auf Sensitivität konnten mit diesem Protokoll HCV infizierte Serumproben mit 50 Kopien/ml (vorher vermessen mit quantitativem bDNA HCV Test 3.0 von BAYER) aufgereinigt und detektiert werden.

SeqID No.5 CCC CTG TGA GGA ACT (AT=W)CT GT
**SeqID No.6 CCG CAG ACC ACT ATG GCT CT**
SeqID No.7 FAM - AGC CTC CAG G(AC=M)C CCC CCC TXT - <u>X = TAMRA (Tetramethylrhodamin)</u>

**Beispiel 8**

Automatisierte Aufreinigung von HCV RNA aus Serum

Der gesamte manuelle Aufreinigungsrozess konnte auf dem TECAN Genesys RSP Pipettierroboter automatisiert werden. Dazu wurden 4 Pipettierkanäle mit 1000 μl Dispensoren verwendet. Als Spitzen wurden 1000 μl (für grosse Volumina) und 200 μl Spitzen (für kleine Volumina) mit Filtereinsätzen verwendet. Die Magnetisierung der Magnetpartikelsuspension erfolgte mit dem TECAN Magnetmodul (TE-MAGS), welches auch über einen Heizblock verfügt. Ein Eppendorfträger für 6x8 Reaktionsgefäße erlaubt das Hin- und Herfahren der Proben zwischen Magnetblock zum Heizblock. Das Programm wurde mit der TECAN Software Gemini 4.0 Version erstellt. Die Puffer (Partikel, Proteinase K, Bindungs-, Wasch- und Elutionspuffer) wurden in 25 ml Container bzw. in 1,5 ml Reaktionsgefäße gefüllt und mit entsprechenden Halterungen von TECAN auf der Platform fixiert und in der Software definiert. Es erfolgte normalerweise eine Aufreinigung von 8 HCV Serumproben, von denen jeweils 500 μl in 8 Reaktionsgefäße des Eppendorfhalters im Magnetmodul (Magnet off) manuell vorgegeben wurden. Im wesentlichen wurden folgende Verfahrenschritte automatisiert hintereinander durchgeführt:

- Zugabe von 10 μl Proteinase K zu 500 μl Serumprobe (mischen mit gleichen Spitzen)
- Inkubation für 10 min im Heizblock 56°C
- Zugabe von 1000 μl Bindungspuffer zu Serumproben (mischen mit gleichen Spitzen)
- Inkubation für 10 min im Heizblock 56°C
- Zugabe von 25 μl Magnetpartikel (vor Aufnahme mischen durch Auf- und Abpipettieren) zur Serumprobe (mischen durch Auf- und Abpipettieren)
- Inkubation für 15 min bei RT (3 Mischschritte nach 5, 10 und 15 min mit 1000 μl Spitzen)
- Magnetpartikelseparation (Magnet on) für 3 min

- Abnehmen des Überstandes (Liquiddetektion)
- Magnet off
- Zugabe von 850 µl Waschpuffer I
- Magnetpartikelseparation (Magnet on) für 30 sec
- Abnehmen des Überstandes (Liquiddetektion)
- Magnet off
- Zugabe von 450 µl Waschpuffer II
- Magnetpartikelseparation (Magnet on) für 30 sec
- Abnehmen des Überstandes (Liquiddetektion)
- Magnet off
- Zugabe von 450 µl Waschpuffer III
- Magnetpartikelseparation (Magnet on) für 30 sec
- Abnehmen des Überstandes (Liquiddetektion)
- Magnet off
- Zugabe von 450 µl Waschpuffer III
- Magnetpartikelseparation (Magnet on) für 30 sec
- Abnehmen des Überstandes (Liquiddetektion)
- Abnehmen restlichen Überstandes (mit 200 µl Spitzen und Z-max Detektion)
- Magnet off
- Zugabe von 100 µl Elutionspuffer (mehrmaliges mischen durch Auf- und Abpipettieren und durch Bewegung des Magneten)
- Inkubation 10 min bei 70°C (dabei nach 5 min mischen durch Bewegung des Magneten)
- Magnet on
- Abnehmen Elutionspuffer mit Z-Max Detektion
- Abgeben in neues Reaktionsgefäß

Die Eluate werden dann manuell mit dem RT-PCR Mastermix auf den Detektionsplatten von ABI zusammengegeben (z.B. 20 µl Eluat + 30 µl Mastermix) und auf dem ABI 7700 detektiert.

**Beispiel 9**

Isolierung von genomischer DNA aus Gewebeschnitten

Ein paraffinierter Gewebeschnitt (z.B. 5 µm) wird mit einem Skalpell von der Glasoberfläche abgekratzt und in ein Eppendorf-Gefäß überführt. Anschließen gibt man 400 µl Lysis- und Bindungspuffer hinzu (5 M Guanidiniumisothiocyanat, 10 mM TrisHCl, 10 % Triton, pH 8,8) und inkubiert für 10 min bei 90°C bei 1200 rpm im Eppendorf Thermomixer 5436. Durch starkes zentrifugieren bei 12000 rpm (4°C 10 min) werden danach Paraffinreste sowie größere Klumpen pelletiert. Paraffin wenn möglich mit Pinzette abfischen. Anschließend gibt man 1 mg (in 25 µl $H_2O$) der beschriebenen silizium-beschichteten Magnetpartikel aus Beispiel Ia hinzu und schüttelt den Ansatz 15 min bei Raumtemperatur (1200 rpm, Eppendorf Thermomixer 5436). Danach werden die Magnetpartikel durch Anlegen eines Magnetfeldes (1 min) an die Gefäßwand gezogen und der Überstand incl. Paraffinpellet sauber abpipettiert. Anschließend werden die Magnetpartikel zunächst zweimal mit einem Waschpuffer I (50 % Äthanol, 20 mM NaCl, 10 mM Tris-HCl, pH 7,5) und danach einmal mit einem Waschpuffer II (20 mM NaCl, 10 mM Tris-HCl, pH 7,5) unter jeweiligem Anlegen des Magnetfeldes gewaschen und 5 min bei 37°C getrocknet. Zur Elution der gebundenen Nukleinsäuren werden 100 µl Elutionspuffer (10 mM Tris, 1 mM EDTA, 0,1 % TritonX-100, pH 9,0) zu den Partikeln gegeben und 15 min bei 90°C inkubiert. Zuletzt wird nochmals ein Magnetfeld angelegt und das Eluat der Ansätze von den Partikeln abpipettiert. Die isolierte DNA kann anschließend in PCR Reaktionen eingesetzt werden.

**Patentansprüche**

1. Siliziumbeschichtete Magnetpartikel, enthaltend Eisenoxid, **dadurch gekennzeichnet, dass** die Magnetpartikel, $SiO_2$ in Konzentrationen von 7 oder weniger Gewichtsprozent enthalten, wobei die Korngrößenverteilung zwischen 0,1 und 1 µm liegt.

2. Magnetpartikel nach Anspruch 1, aufweisend Magnetit-Kerne, die aus mindestens 90 Gewichtprozent $Fe_3O_4$ bestehen und deren Oberfläche mit Silikat beschichtet ist.

**3.** Verfahren zur Herstellung von Partikeln nach den Ansprüchen 1 oder 2 **dadurch gekennzeichnet, dass** die Silikatabscheidung aus Wasserglas oder Kieselsol auf den Eisenoxidpartikeln ohne Einstellung des Reaktionsgemisches auf saure pH-Werte erfolgt und dass die Partikel $SiO_2$ in Konzentrationen von 7 oder weniger Gewichtsprozent enthalten, wobei die Korngrößenverteilung zwischen 0,1 und 1 $\mu$m liegt.

**4.** Verfahren zur Herstellung von Partikeln nach Anspruch 3, **dadurch gekennzeichnet, dass** ein $SiO_2$-haltiges, hydrophiles Eisenoxid-Pigment mit einem pH Wert von 7,0 oder weniger mit einer Alkalisilikatlösung mit einem pH Wert von 10 oder höher umgesetzt wird.

**5.** Verfahren zur Herstellung von Partikeln nach Anspruch 3, **dadurch gekennzeichnet, dass** ein $SiO_2$-haltiges, hydrophiles Eisenoxid-Pigment mit einem pH Wert von 7,0 oder weniger mit einem Kieselsol eines pH Wertes von 8 oder höher umgesetzt wird.

**6.** Verfahren zur Aufreinigung von Nukleinsäuren aus biologischen Körperproben unter Verwendung von Magnetpartikeln nach den Ansprüchen 1 oder 2.

**7.** Verfahren nach Anspruch 6, **dadurch gekennzeichnet, dass** dieser Prozess ganz oder in Teilschritten automatisierbar ist.

**8.** Verfahren nach Anspruch 6 und 7, **dadurch gekennzeichnet, dass** der quantitative Nachweis der isolierten Nukleinsäure mit PCR in Anwesenheit der Magnetpartikel erfolgen kann ohne vorherigen Trennschritt.

**9.** Verfahren nach Anspruch 6 bis 8, **dadurch gekennzeichnet, dass** es sich bei der Nukleinsäure um RNA oder DNA handelt

**10.** Verfahren nach Anspruch 6 bis 9, **dadurch gekennzeichnet, dass** es sich um virale RNA handelt.

**11.** Verfahren nach Anspruch 6 bis 9, **dadurch gekennzeichnet, dass** es sich RNA HCV oder HIV handelt.

**Claims**

**1.** Silicon-coated magnetic particles comprising iron oxide, **characterized in that** the magnetic particles contain $SiO_2$ in concentrations of 7 per cent by weight or less, wherein the particle size distribution is between 0.1 and 1 $\mu$m.

**2.** Magnetic particles according to Claim 1, having magnetite cores which are composed of at least 90 per cent by weight of $Fe_3O_4$ and have been surface coated with silicate.

**3.** Process for producing particles according to Claim 1 or 2, **characterized in that** the silicate deposition is effected from waterglass or silica sol onto the iron oxide particles without adjustment of the reaction mixture to acidic pH values, and **in that** the particles contain $SiO_2$ in concentrations of 7 per cent by weight or less, wherein the particle size distribution is between 0.1 and 1 $\mu$m.

**4.** Process for producing particles according to Claim 3, **characterized in that** an $SiO_2$-containing hydrophilic iron oxide pigment having a pH of 7.0 or less is reacted with an alkali metal silicate solution having a pH of 10 or higher.

**5.** Process for producing particles according to Claim 3, **characterized in that** an $SiO_2$-containing hydrophilic iron oxide pigment having a pH of 7.0 or less is reacted with a silica sol having a pH of 8 or higher.

**6.** Process for purifying nucleic acids from biological body samples using magnetic particles according to claim 1 or 2.

**7.** Process according to Claim 6, **characterized in that** this whole process or component steps thereof can be automated.

**8.** Process according to Claim 6 or 7, **characterized in that** quantitative detection of the isolated nucleic acid can be effected with PCR in the presence of the magnetic particles without a prior separation step.

**9.** Process according to Claims 6 to 8, **characterized in that** the nucleic acid is RNA or DNA.

**10.** Process according to Claims 6 to 9, **characterized in that** the nucleic acid is viral RNA.

**11.** Process according to Claims 6 to 9, **characterized in that** the nucleic acid is HCV or HIV RNA.

**Revendications**

**1.** Particules magnétiques revêtues de silicium, contenant de l'oxyde de fer, **caractérisées en ce que** les particules magnétiques contiennent du $SiO_2$ en des concentrations égales ou inférieures à 7 % en poids, la granulométrie étant comprise entre 0,1 et 1 $\mu$m.

**2.** Particules magnétiques selon la revendication 1, présentant des noyaux de magnétite, qui sont constitués d'au moins 90 % en poids de $Fe_3O_4$ et dont la surface est revêtue de silicate.

**3.** Procédé servant à fabriquer des particules selon les revendications 1 ou 2, **caractérisé en ce que** le dépôt de silicate composé de verre soluble ou de sol de silice sur les particules d'oxyde de fer se fait sans ajustement des valeurs de pH acides du mélange de réaction, et **en ce que** les particules contiennent du $SiO_2$ en des concentrations inférieures ou égales à 7 % en poids, la granulométrie étant comprise entre 0,1 et 1 $\mu$m.

**4.** Procédé servant à fabriquer des particules selon la revendication 3, **caractérisé en ce qu'**un pigment d'oxyde de fer hydrophile contenant du $SiO_2$ présentant une valeur pH inférieure ou égale à 7 est mélangé à une solution de silicate alcalin présentant une valeur pH égale ou supérieure à 10.

**5.** Procédé servant à fabriquer des particules selon la revendication 3, **caractérisé en ce qu'**un pigment d'oxyde de fer hydrophile contenant du $SiO_2$ présentant une valeur pH inférieure ou égale à 7 est mélangé à un sol de silice d'une valeur pH égale ou supérieure à 8.

**6.** Procédé servant à purifier des acides nucléiques issus d'échantillons biologiques corporels en utilisant des particules magnétiques selon les revendications 1 ou 2.

**7.** Procédé selon la revendication 6, **caractérisé en ce que** ledit processus peut être automatisé en totalité ou selon des phases partielles.

**8.** Procédé selon la revendication 6 et la revendication 7, **caractérisé en ce que** la quantité de l'acide nucléique isolé peut être démontrée par une technique PCR en présence des particules magnétiques sans phase de séparation préalable.

**9.** Procédé selon la revendication 6 à la revendication 8, **caractérisé en ce que** l'acide nucléique est l'ARN ou l'ADN.

**10.** Procédé selon la revendication 6 à la revendication 9, **caractérisé en ce qu'**il s'agit d'ARN viraux.

**11.** Procédé selon la revendication 6 à 9, **caractérisé en ce que** l'ARN est le VHC ou le VIH.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0389063 B1
- WO 0146404 A
- US 05734020 A
- US 05610274 A
- DE 19912799
- WO 9641811 A
- WO 0188540 A
- WO 0171732 A
- WO 9831840 A
- DE 4207262
- WO 017132 A

**In der Beschreibung aufgeführte Nicht-Patentliteratur**

- *Proc. Natl. Acad. USA,* 1979, vol. 76, 615-619
- *Anal. Biochem.,* 1982, vol. 121, 382-387
- *Methods Enzymol.,* 1979, vol. 65, 176-182
- *J. Clin. Microbiol.,* 1990, vol. 28, 495-503
- **P. K. ILER.** The chemistry of Silica. John Wiley, 1979